(19) Europäisches Patentamt
European Patent Office
Office européen des brevets

(11) Veröffentlichungsnummer: **0 212 170**
**A2**

(12) **EUROPÄISCHE PATENTANMELDUNG**

(21) Anmeldenummer: 86109032.2

(51) Int. Cl.⁴: **G01K 1/08**

(22) Anmeldetag: 02.07.86

(30) Priorität: 06.08.85 DE 3528161

(43) Veröffentlichungstag der Anmeldung:
04.03.87 Patentblatt 87/10

(84) Benannte Vertragsstaaten:
AT BE CH DE FR GB IT LI LU NL SE

(71) Anmelder: Degussa Aktiengesellschaft
Weissfrauenstrasse 9
D-6000 Frankfurt am Main 1(DE)

(72) Erfinder: Freppon, Willi
Kettelerstrasse 40
D-6463 Freigericht 1(DE)
Erfinder: Hellmann, Paul
Riedstrasse 8
D-6457 Maintal 2(DE)
Erfinder: Van Heijst, Theo
Akeleihof 7
NL-5672 BC Nuenen(NL)

(54) **Thermoelement zur Messung von Temperaturen in Vakuumöfen.**

(57) Zur schnelleren Temperaturerfassung und Abwehr von Störsignalen bei der Temperaturmessung in Vakuumöfen verwendet man Thermoelemente, deren Schutzrohr aus Quarzglas besteht und mit einem geerdeten Metalldraht umwendelt ist.

EP 0 212 170 A2

## Thermoelement zur Messung von Temperaturen in Vakuumöfen

Die Erfindung betrifft einThermoelement aus Thermopaar und Schutzrohr zur Messung von Temperaturen in Vakuumöfen im Bereich von 300 bis 1300° C.

Die Temperaturkontrolle in Vakuumöfen erfolgt normalerweise über Thermoelemente, bestehend aus einem Thermopaar -meist Platin/Platinrhodium -und einem Schutzrohr. Als Schutzrohrmaterial wird Keramik verwendet, insbesondere Aluminiumoxid. Je nach Wandstärke und dem zu messenden bzw. regelnden Temperaturbereich bewirkt das Schutzrohr eine Verzögerung der Temperaturmessung am Thermopaar. Besonders im Temperaturbereich von 300 bis 600° C kann diese Anzeigeverzögerung beträchtliche Werte annehmen. Außerdem hat es sich gezeigt, daß auf Thermoelemente mit Nichtmetallschutzrohren leicht Störspannungen übertragen werden, die das gesamte Meßsystem unbrauchbar machen.

Es war daher Aufgabe der vorliegenden Erfindung, ein Thermoelement aus Thermopaar und Schutzrohr zu Messung von Temperaturen in Vakuumöfen im Bereich von 300 bis 1300° C zu entwickeln, das auch bei relativ niedrigen Offentemperaturen zu einer möglichst schnellen Temperaturerfassung führt und das außerdem vor Störspannungen geschützt ist.

Diese Aufgabe wird erfindungsgemäß dadurch gelöst, daß das Schutzrohr aus Quarzglas besteht und mit einem geerdeten Metalldraht umwendelt ist.

Vorzugsweise sind pro Zentimeter Schutzrohrlänge 1 bis 5 Drahtwindungen aufgebracht, wobei die Drahtwendel direkt auf dem Schutzrohr aufliegen.

Da Quarzglas licht-und infrarotdurchlässig ist, wird auch in niedrigen Temperaturbereichen die relativ schwache Wärmestrahlung rasch auf das Thermopaar übertragen, so daß die im Vakuumofen herrschenden Temperaturen wesentlich schneller erfasst und präziser gemessen werden können als mit Thermoelemten, die konventionelle keramische Schutzrohre besitzen.

Die Umwedelung mit einem geerdeten Metalldraht schirmt das Thermoelement vor elektrischen Störeinflüssen im Ofenraum ab, ohne daß die Strahlungsdurchlässigkeit des Schutzrohres behindert wird. Als Drahtmaterialien haben sich, je nach Temperatureinsatz, Chromnickel, Molybdän und Platin bewährt.

Anhand der schematischen Abbildung soll das erfindungsgemäße Thermoelement in beispielhafter Ausführungsform näher erläutert werden.

Das Thermoelement besteht aus einem Schutzrohr (1) aus Quarzglas, in dem sich ein Trägerkörper (2) mit dem Thermopaar (3) befindet. Das Schutzrohr (1) ist von einem Metalldraht (4) umwendelt und in einer Halterung (5) befestigt. Der Metalldraht (4) ist geerdet (6).

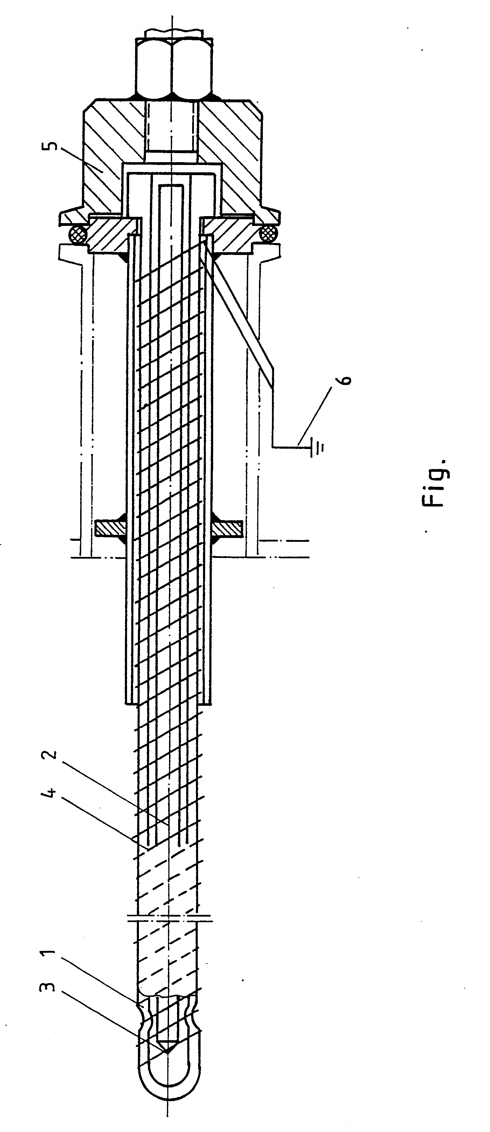

## Ansprüche

1. Thermoelement aus Thermopaar und Schutzrohr zur Messung von Temperaturen in Vakuumöfen im Bereich von 300 bis 1300° C,

dadurch gekennzeichnet,

daß das Schutzrohr aus Quarzglas besteht und mit einem geerdeten Metalldraht umwendelt ist.

2. Thermoelement nach Anspruch 1,

dadurch gekennzeichnet,

daß pro Zentimeter Schutzrohr 1 bis 5 Drahtwindungen aufgebracht sind.

Fig.

0 212 170